# EUROPEAN PATENT SPECIFICATION

(11) **EP 2 180 652 B1**
(45) Date of publication and mention of the grant of the patent: **28.09.2016**
(21) Application number: 08167077.0
(22) Date of filing: 21.10.2008
(51) Int. Cl.: H04L 29/06

(54) **Method and system for transferring media information**
Verfahren und System zur Medieninformationsübertragung
Procédé et système de tranfert d'informations de support

(43) Date of publication of application: 28.04.2010
(73) Proprietor: Telia Company AB, 169 94 Solna (SE)
(72) Inventor: Leinonen, Antti, 36240 Kangasala (FI)
(74) Representative: Kolster Oy Ab

(56) References cited:
- EP-A- 1 330 098
- WO-A-2005/109829
- US-A- 6 068 188

## Description

### FIELD OF THE INVENTION

The invention relates to transferring media information.

### BACKGROUND OF THE INVENTION

Nowadays there are a plurality of alternative ways to receive various media data, such as multimedia data comprising e.g. video and/or audio data For example, television and radio channels or video-on-demand programmes can be watched and listened to by not only conventional TV and radio sets but also by other kind of terminal equipment, such as mobile devices, e.g. mobile phones or PDA (Personal Digital Assistant) devices. In a similar fashion, various games involving interactive media can be played by different kinds of terminal equipment.

In case a user is e.g. watching a TV programme at home but then needs to leave for work or school, for example, the user can continue the TV programme watching session with mobile terminal equipment that has support for DVB-H (Digital Video Broadcasting - Handheld) or some other mobile TV solution. In this case, if the user knows, which channel he/she is watching on the home TV screen and if he/she knows that the same feed is also available in the mobile TV, the switchover can be done manually. Thus, the user can manually navigate with his/her mobile device and find the same video feed. Furthermore, if it deals with VOD (Video-On-Demand) programme material, the user has also to fast-forward to the time position he/she wants to continue the programme watching session. Such a manual switchover performed entirely by the user may be troublesome and time-consuming. The user has to know the media session, e.g. a TV channel, VOD programme or game, in question and also be able to locate where it is available in a suitable format for the mobile device or other terminal equipment, which may have different requirements for the format of the media than the terminal equipment that the user used in the first place.

Document WO 2007/107982 discloses a solution for session handover between terminals. The document provides a solution in which two user terminals communicate with each other via short-range communication and transfer information about a remote session in order to enable a handover of the remote session from one user terminal to another. According to the disclosed embodiments, the communication is carried out by Bluetooth communication, infrared communication or ultrasound communication between the user terminals. A possible drawback related to the disclosed solution is that in a case where several users wish to switch a session e.g. from a public screen to their own mobile devices essentially simultaneously, a communication channel(s) typically related to such Bluetooth, infrared or ultrasound communication may become congested.

Document US 6068188 discloses a system and a method for composing menus of URL-encoded bar code symbols specifying the location of Internet-based information resources on the Internet.

Document WO 2005/109829 discloses a method for seamlessly transferring the execution of a software application from a first device to a second device. Also in this solution the first and the second device communicate with each other by way of mutual near-field communication.

### BRIEF DESCRIPTION OF THE INVENTION

The object of the invention is thus to provide a method and an apparatus implementing the method such that the above problem can be solved or at least alleviated. This is achieved by a method and a system which are characterized by what is stated in independent claims 1 and 10. The preferred embodiments of the invention are disclosed in the dependent claims.

The invention is based on the idea of using a visual identifier, such as a barcode, associated with the media session for the transmission of information enabling a media session to be transferred or copied into one or more terminal devices from the original terminal device in which the media session was originally presented.

The method and apparatus of the invention have an advantage that, since a visual identifier is used for transferring of information associated with the media session, it does not establish an actual communication channel between the terminal devices. Thus, there is no danger of such a communication channel(s) to become congested if several terminal devices wish to transfer the information simultaneously. In addition, the use of such a visual identifier enables the receiving party of the transferred information associated with the media session to remain anonymous to the providing party of the information, since the receiving party needs merely to read the visual identifier and no two-way connection needs to be established between the two parties, in which the anonymity and privacy of the receiving party might be compromised.

### BRIEF DESCRIPTION OF THE DRAWINGS

In the following, the invention will be described in greater detail by means of preferred embodiments with reference to the accompanying drawings, in which
Figure 1 is a simplified block diagram of a system, where the invention may be applied, and
Figure 2 is a diagram in accordance with an embodiment of the invention.

### DETAILED DESCRIPTION OF THE INVENTION

The invention may be applied to various systems in which various media data is delivered to users of terminal equipment capable of receiving and presenting media data. Such media data includes, for example, live and still video data, audio data and text data among with possibly needed control data. In this context, the term 'media session' should be understood broadly to refer to sessions involving transfer of media data, either one-way or two-way, between two or more parties. Media sessions may be interactive, such as playing sessions of games, or relate to various broadcast programmes in the form of watching sessions of digital or analogue TV channels or programmes or VOD (Video-On-Demand) programmes. Media sessions can further include various call sessions, such as phone or video calls or videoconferences, without limiting the invention to these examples. Various systems employed in delivering media contents to users progress constantly, and consequently, the invention may need additional alterations in the future. All terms and expressions should therefore be interpreted in a broad sense, because their intention is only to illustrate, not to restrict, the invention.

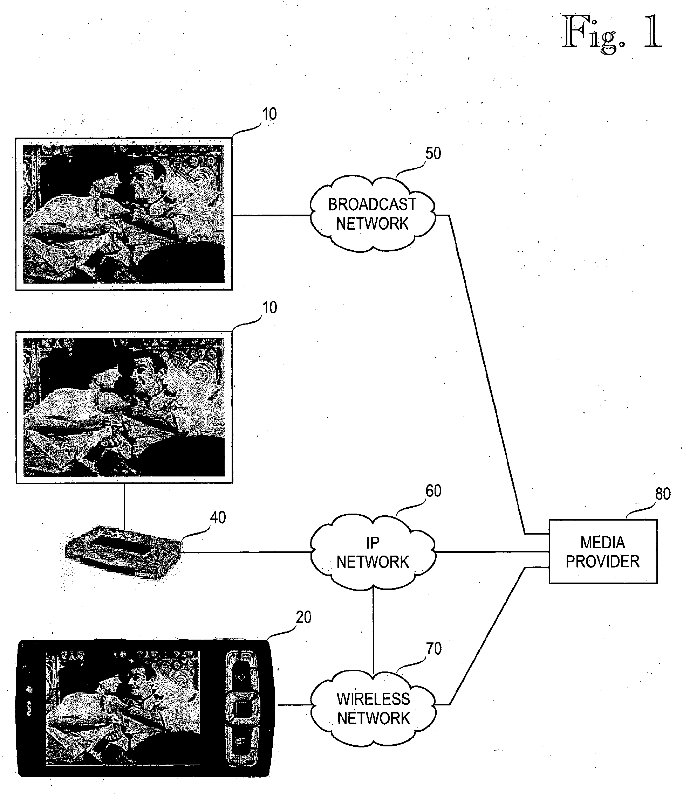

Figure 1 shows an example of a system to which the invention may be applied. It is to be noted that, for the sake of clarity, the figure only shows those components that are relevant to the understanding of the invention. The system of Figure 1 comprises three pieces of terminal equipment: two TV sets 10 and one mobile device 20. The TV sets 10 may be digital, such as DVB-T, DVB-C or DVB-S (Digital Video Broadcasting - Terrestrial, - Cable or - Satellite) capable, devices or analogue TV devices. In the figure, one of the TV sets 10 is directly connected to a broadcast network 50, such as a terrestrial, cable or satellite TV broadcast network, via which it receives the media data from a media provider 80. The media provider 80 may be e.g. a TV service provider or VOD (stored video) service provider or any entity or party providing media content. The other TV set 10 is connected to an IP network 60, such as the Internet, via an IPTV (Internet Protocol Television) set-top box (decoder or encoder/decoder), which enables the TV set 10 to receive and present media data from an IPTV service. The functionality of the IPTV set-top box 40 and TV set 10 could also be integrated into a single device. Such IPTV-capable receiving equipment could also be comprised of a personal computer system or a similar device. The mobile device 20 may be a mobile phone, a PDA device or a portable computer, a notebook computer or a personal computer with a wireless LAN (Local -Area Network) adapter, for example. The mobile device 20 may be e.g. a DVB-H (Digital Video Broadcasting - Handheld) capable device. The mobile device 20 is connected to a wireless network 70 via a wireless connection. The wireless network 70 may be any wireless access network, such as WLAN (Wireless Local Area Network), WiMAX, GPRS (General Packet Radio Service) network, GSM (Global System for Mobile Communications) network or a third generation mobile communication system, such as UMTS (Universal Mobile Telecommunications System), or a combination thereof. The mobile device 20 may receive media data related to a media session via the wireless network 70 directly connected to the media provider 80 or alternatively via the wireless network 70 connected to the IP network 60 which, in turn, is connected to the media provider 80, for example. It should be noted, however, that the above examples only illustrate exemplary ways of providing media sessions but do not in any way restrict the implementation of the invention.

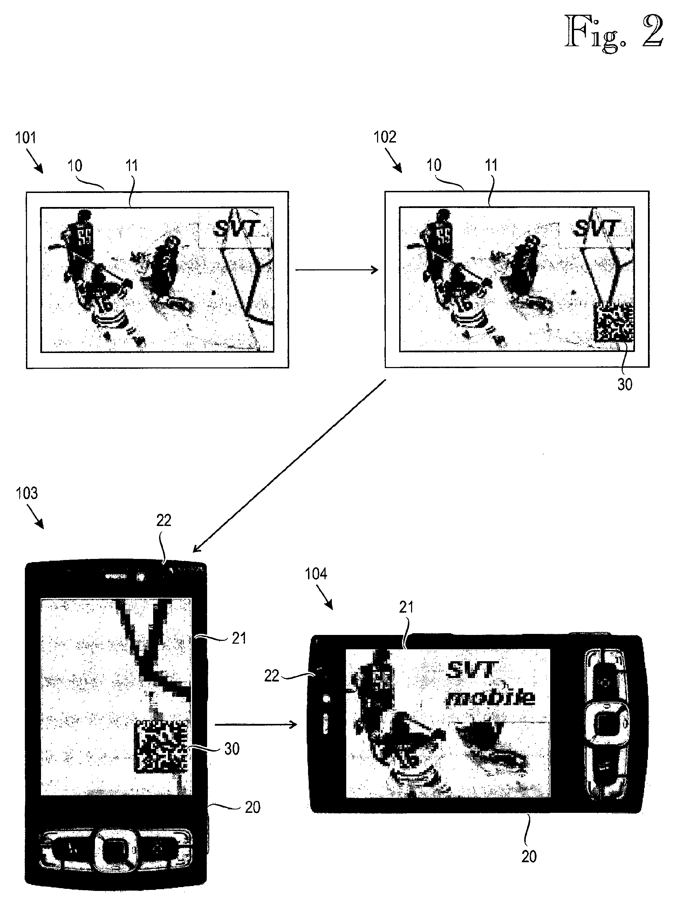

Figure 2 shows a diagram according to one possible embodiment. In phase 101 first terminal equipment 10 is receiving and presenting media data related to a media session. The terminal equipment 10 may present e.g. video data on a video screen 11, and/or audio data. Next, information associated with the media session is to be transferred to another set of terminal equipment. According to an embodiment, this is accomplished such that in phase 102 the first terminal equipment 10 displays a visual identifier 30, such as a barcode, associated with the media session, and in phase 103 second terminal equipment 20 reads said visual identifier 30 displayed by the first terminal equipment 10. After reading the visual identifier 30, the second terminal 20 starts to receive and present at least part of the media data related to the media session on the basis of the transferred information, i.e. the information included in the visual identifier 30. The second terminal equipment 20 may present e.g. video data on a video screen 21, and/or audio data. It should be noted that said receiving and presenting of the at least part of the media data related to the media session also include a situation in which the playback of the media data is in a pause state, i.e. the playback is temporarily paused. In other words, the concept of receiving and presenting media information not only includes an active play state but also a pause state of the playback. This enables the user, for instance, to delay the start of the play state of the playback, of the media data related to the media session by keeping the playback in the pause state until the user can start to follow the media session. This may be useful in a situation in which the user is moving e.g. from a terminal building to a transportation vehicle. During the pause-state the possibly received media data relating to e.g. a broadcast media session could be stored in a buffer memory e.g. in the terminal equipment or in the media provider or in another suitable location. Alternatively, resuming of the play state after a pause state could be implemented such that the media data is played back from its current time position, e.g. in the case of real-time data, such as broadcast media data or live media data. After the second terminal equipment starts to receive and present said at least part of the media data related to the media session, the first terminal equipment 10 may either continue the media session or stop it. This, however, has no relevance to the basic idea of the invention. The transfer of information associated with the media session may be initiated by the user of the first and/or second user equipment, or it may take place automatically according to certain predetermined rules or conditions, for example. If the first terminal equipment 10 is e.g. a TV set or a corresponding device, it may have a dedicated control button in the device itself and/or in its remote control device (not shown in the figures) such that a push of the button by the user makes the visual identifier 30 visible on the screen 11 of the terminal equipment 10. Alternatively, or in addition to that, the visual identifier could be shown either at certain time intervals or continuously on the screen 11 of the terminal equipment. Thus, the user of the mobile device 20 could easily read the visual identifier 30 from a screen in a public space and thus copy the media session into his/hers mobile device in order to continue to follow the media session with the mobile device.

In the above exemplary embodiment, the terminal equipment 10 and 20 may be any kind of terminal equipment such that the first terminal equipment is able to display a visual identifier 30 associated with the media session and the second terminal equipment is able to read the visual identifier 30 displayed by the first terminal equipment 10. The first terminal equipment may display the visual identifier on a TV screen 11, for example, or it may have another screen or display or even a dedicated display or corresponding means for displaying the visual identifier 30. The second terminal equipment 20 may have a camera 22 or a special scanning device such as a barcode reader, either integrated into the equipment or as a separate unit connected to the equipment, or corresponding means for reading the visual identifier 30 displayed by the first terminal equipment 10. For example, many existing mobile phones and PDA devices and computers are readily equipped with a camera 22 and software suitable for reading and interpreting barcodes and other similar visual identifiers. Thus, when e.g. such a mobile device capable of reading and interpreting barcodes is used to read a barcode displayed by another set of terminal equipment, the mobile device may be configured to automatically start the media session indicated by the read barcode.

In the exemplary embodiment shown in Figure 2, the second terminal equipment 20 may receive said at least part of the media data from a different source or from the same source as the first terminal equipment 10. Thus, the media session is not necessarily bound to a certain media source. For example, if the first media equipment is a TV set and the second terminal equipment 20 is a mobile device, they might receive the same media content, such as a video programme, from different media sources because the mobile equipment might need to receive the media data in another format than the TV set. According to an embodiment, regardless of the source of the received media data, the format of said at least part of the media data to be received by the second terminal equipment 20 is adapted to requirements of media data reception properties and/or media data reproduction properties of the second terminal equipment. In this connection the term format of the media data may define, for example, the encoding format of the media data, the resolution of the media data and/or the data rate of the media data. Such an adaptation of the media data may be performed by the media provider 80 or by some other system element in the transmission path between the media provider 80 and the terminal equipment. For example, the broadcast network 50, the IP network 60 or the wireless network 70, or a network element thereof, could perform any necessary adaptation of the media data, such as a reduction of a data rate of a video stream to be more suitable for a mobile device. Also the receiving terminal equipment 10 or 20 may perform the adaptation of the received media data, for example a reseating of video data.

Typically the media data related to a media session comprises at least video data and/or audio data. According to an embodiment, when the media data received by the first terminal equipment 10 comprises at least video data and audio data, the second terminal equipment 20 only receives and presents the audio data part of the media data. Alternatively, the second terminal equipment 20 receives and presents the same media data as the first terminal equipment but only presents the audio data part of the media data. These embodiments are preferable in a situation where a video programme is shown on a screen in a public space where it is not possible to hear the audio part of the media data. In this case, a personal mobile device could be used as an audio source.

According to an embodiment, the visual identifier 30 associated with the media session identifies the media session or the media data and/or the source of the media data related to the media session. Thus, the visual identifier could identify e.g. a TV/video programme or a TV channel, or provide a URL (Uniform Resource Locator) address or an IP (Internet Protocol) address to the source of the media data related to the media session. According to an embodiment, the visual identifier 30 associated with the media session further identifies a time position of the media data. For example, if the media session is a VOD programme, the visual identifier 30 associated with the media session preferably also contains information about the current time position of the programme i.e. indicates the programme time point currently shown by the first terminal equipment, from which the information associated with the media session is to be transferred to the second terminal equipment.

The visual identifier 30 may be in the form of a barcode or comprise more than one barcodes. The barcode(s) may be either a regular linear barcode (1 D barcode) or a so-called 2D barcode as shown in Figure 2. Any barcode type capable of conveying the necessary information may be used in connection with the present invention. Also other kind of visual identifiers may be used.

The following gives an example of a possible implementation of the invention according to an embodiment. A user has an IPTV set-top box equipped with a barcode (or other visual identifier) encoding software and/or hardware and a capability to bring up the resulting barcode(s) to a screen connected to the set-top box. This functionality might be initiated by a press of a separate key in a remote control of the device or as a function in a menu structure of the device. When a user requests a mobile continuation tag, the set-top box preferably checks whether there is a special mobile version available of the programme currently being received and displayed by the set-top box. If a mobile version exists, the set-top box preferably encodes an URL address representing that video stream as a barcode. If a mobile version does not exist, the set-top box preferably encodes an URL of the current broadcast stream or it can encode an URL pointing to a resource, which tells the user that no suitable mobile video is available. The information about the available streams may be provisioned to the set-top box either in a continuous manner or the set-top box may ask for information from a backend system. The user can then read the barcode with his/her mobile device. As soon as the barcode has been read, the mobile device preferably opens the resource pointed by the URL in an appropriate viewer client within the mobile device.

In case the media session is a VOD programme or clip, the difference with respect to the above example is that a VOD clip does not have a universal stage. Thus, the viewer client cannot be aware of how much of the clip the user has already seen with the IPTV equipment. Thus, the information is preferably also encoded to the barcode. This information can be encoded as a separate URL parameter, for example. As soon as the barcode with the additional position information has been read, the mobile device may open the resource pointed by the URL from the right time position and the user can continue to watch the stream from the correct position. The user can naturally also pause the VOD clip or save it as a bookmark and continue to watch later from the correct position.

The invention is also suitable to be used in public locations. For example, there could be big screens in e.g. train and bus stations, showing some live-TV programme or VOD material, or both. While waiting for the bus or the train, the user could watch such a programme. If the bus or the train arrives before the programme has ended, the user could continue to watch the show with his/her mobile phone. The same programme might also be shown on several screens simultaneously. The needed barcode could be shown on all of the screens all the time. But it might also be the case that only the screens that are near the user could contain the visual identifier.

In case a mobile device is used as an audio source for a separate video screen e.g. in public spaces, the implementation might require some additional delays to be added to an IPTV broadcast. The latencies are usually longer in mobile TV than in IPTV. The capability of synchronizing the video from IPTV and audio from mobile TV requires that, when the video is being shown, the mobile device is ready to play the audio. If no extra delays are added, the audio will lag behind and lip-sync might be missing. This synchronization in the form of adding delay could be implemented, for example, in the terminal equipment reproducing the IPTV broadcast.

The above-described functionality according to any one of the above embodiments, or a combination thereof, may be implemented by means of suitable software provided in one or more computers or corresponding digital signal processing (DSP) equipment, for example. Such a computer or digital signal processing equipment preferably comprises at least a working memory (RAM) providing storage area for arithmetical operations and a central processing unit (CPU), such as a general-purpose digital signal processor. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of the microinstructions may vary depending on the CPU design. The program instructions may be coded by a programming language, which may be a high-level programming language, such as C, Java, etc., or a low-level programming language, such as a machine language, or an assembler. The computer may also have an operating system, which may provide system services to a computer program written with the program instructions. The computer or other apparatus implementing the invention further preferably comprises suitable input means for receiving data, and output means for outputting data. It is also possible to use a specific integrated circuit or circuits, or discrete electric components and devices for implementing the functionality according to any one of the embodiments.

The above-described functionality according to any one of the above embodiments, or any combination thereof, may be implemented in existing system elements, such as various terminal equipment devices and network elements, and/or by using separate dedicated elements or devices in a centralized or distributed manner. Present terminal equipment, such as mobile phones, TV receiver equipment and personal computers, and various network equipment typically comprise one or more processors and a memory that can be readily utilized to implement the functions according to the various embodiments. Thus, all modifications and configurations required for implementing an embodiment of the invention e.g. in existing terminal equipment devices may be performed as software routines, which may be implemented as added or updated software routines. If the functionality of the invention is implemented by software, such software can be provided as a computer program product comprising computer program code which, when run on a computer, causes the computer or corresponding arrangement to perform the functionality according to the invention as described abode. Such a computer program code may be stored on a computer readable medium, suck as suitable memory means, e.g. a flash memory or a disc memory from which it is loadable to the unit or units executing the program code. In addition, such a computer program code implementing the invention may be loaded to the unit or units executing the computer program code via a suitable data network, for example, and it may replace or update a possibly existing program code. Any apparatus, such as terminal equipment, may be implemented as a single unit or as two or more separate units that are configured to implement the functionality of the various embodiments. Here the term 'unit' refers generally to a physical or logical entity, such as a physical device or a part thereof or a software routine.

It is apparent to a person skilled in the art that as technology advances the basic idea of the invention may be implemented in a variety of ways. The invention and the embodiments thereof are thus not restricted to the above-described examples, but they may vary within the scope of the claims.

## Claims

1. A method for transferring media information, the method comprising:
receiving and presenting (101) media data related to a media session by first terminal equipment (10, 40),
transferring from the first terminal equipment (10, 40) to second terminal equipment (20) information associated with the media session, and
starting to receive and present (104) at least part of the media data related to the media session by the second terminal equipment (20) on the basis of the transferred information, **characterized in that** the transferring of the information associated with the media session comprises:
displaying (102), by the first terminal equipment (10, 40), a visual identifier (30) associated with the media session, and
reading (103), by the second terminal equipment (20), said visual identifier displayed by the first terminal equipment.

2. The method of claim 1, **characterized by** receiving, by the second terminal equipment (20), said at least part of the media data from a different source or from the same source as the first terminal equipment (10, 40).

3. The method of claim 1 or 2, **characterized in that** the format of said at least part of the media data to be received by the second terminal equipment (20) is adapted to requirements of media data reception properties and/or media data reproduction properties of the second terminal equipment.

4. The method of claim 3, **characterized in that** the format of the media data defines the encoding format of the media data, the revolution of the media data, and/or the data rate of the media data.

5. The method of any one of claims 1 to 4, **characterized in that** the media data comprises at least video data and/or audio data.

6. The method of claim 5, **characterized in that** the media data received by the first terminal equipment (10, 40) comprises at least video data and audio data, wherein the second terminal equipment (20) receives and presents, or only presents the audio data part of the media data.

7. The method of any one of claims 1 to 6, **characterized in that** the visual identifier (30) associated with the media session identifies the media session or the media data, and/or the source of the media data related to the media session.

8. The method of claim 7, **characterized in that** the visual identifier (30) associated with the media session further identifies a time position of the media data.

9. The method of any one of claims 1 to 8, **characterized in that** the visual identifier comprises at least one barcode (30).

10. A system for transferring media information, the system comprising:
first terminal equipment (10, 40) configured to receive and present media data related to a media session, and to provide information associated with the media session; and
second terminal equipment (20) configured to receive the information associated with the media session provided by the fist terminal equipment, and to receive and present at least part of the media data related to the media session on the basis of the received information, **characterized in that**
the first terminal equipment (10, 40) is configured to provide the information associated with the media session by displaying a visual identifier (30) associated with the media session, and
the second terminal equipment (20) is configured to receive the information associated with the media session by reading said visual identifier displayed by the first terminal equipment.

11. The system of claim 10, **characterized in that** the visual identifier (30) comprises at least one barcode.

## Patentansprüche

1. Verfahren zur Übertragung von Medieninformationen, wobei das Verfahren Folgendes umfasst:
Empfangen und Präsentieren (101) von Mediendaten, die mit einer Mediensitzung zusammenhängen, durch eine erste Endeinrichtung (10, 40),
Übertragen von der Mediensitzung zugeordneten Information von der ersten Endeinrichtung (10, 40) an eine zweite Endeinrichtung (20), und
Beginnen, zumindest einen Teil der mit der Mediensitzung zusammenhängenden Mediendaten durch die zweite Endeinrichtung (20) auf Basis der übertragenen Information zu empfangen und zu präsentieren (104), **dadurch gekennzeichnet,**
**dass** das Übertragen der der Mediensitzung zugeordneten Information umfasst:
Anzeigen (102) eines mit der Mediensitzung verknüpften visuellen Erkennungszeichens (30) durch die erste Endeinrichtung (10, 40) und
Lesen (103) des besagten visuellen Erkennungszeichens, das von der ersten Endeinrichtung angezeigt wird, durch die zweite Endeinrichtung (20).

2. Verfahren nach Anspruch 1, **gekennzeichnet durch** Empfangen des besagten zumindest einen Teils der Mediendaten **durch** die zweite Endeinrichtung (20) von einer anderen Quelle oder von derselben Quelle wie die erste Endeinrichtung (10, 40).

3. Verfahren nach Anspruch 1 oder 2, **gekennzeichnet dadurch, dass** das Format des besagten zumindest einen Teils der Mediendaten, der durch die zweite Endeinrichtung (20) empfangen werden soll, an Anforderungen von Mediendaten-Empfangseigenschaften und/oder Mediendaten-Wiedergabeeigenschaften der zweiten Endeinrichtung angepasst ist.

4. Verfahren nach Anspruch 3, **gekennzeichnet dadurch, dass** das Format der Mediendaten das Codierungsformat der Mediendaten, die Auflösung der Mediendaten und/oder die Datenrate der Mediendaten definiert.

5. Verfahren nach einem der Ansprüche 1 bis 4, **gekennzeichnet dadurch, dass** die Mediendaten zumindest Videodaten und/oder Audiodaten umfassen.

6. Verfahren nach Anspruch 5, **gekennzeichnet dadurch, dass** die durch die erste Endeinrichtung (10, 40) empfangenen Mediendaten zumindest Videodaten und/oder Audiodaten umfassen, wobei die zweite Endeinrichtung (20) den Audiodaten-Teil der Mediendaten empfängt und präsentiert, oder nur präsentiert.

7. Verfahren nach einem der Ansprüche 1 bis 6, **gekennzeichnet dadurch, dass** das mit der Mediensitzung verknüpfte visuelle Erkennungszeichen (30) die Mediensitzung oder die Mediendaten, und/oder die Quelle der mit der Mediensitzung zusammenhängenden Mediendaten identifiziert.

8. Verfahren nach Anspruch 7, **gekennzeichnet dadurch, dass** das der Mediensitzung zugeordnete visuelle Erkennungszeichen (30) ferner eine zeitliche Position der Mediendaten identifiziert.

9. Verfahren nach einem der Ansprüche 1 bis 8, **gekennzeichnet dadurch, dass** das visuelle Erkennungszeichen zumindest einen Strichcode umfasst (30).

10. System zur Übertragung von Medieninformationen, wobei das System Folgendes umfasst:
eine erste Endeinrichtung (10, 40), welche zum Empfangen und Präsentieren von mit einer Mediensitzung zusammenhängenden Mediendaten, sowie zum Bereitstellen von der Mediensitzung zugeordneter Information eingerichtet ist; und
eine zweite Endeinrichtung (20), welche zum Empfangen der von der ersten Endeinrichtung bereitgestellten, der Mediensitzung zugeordneten Information und zum Empfangen und Präsentieren zumindest eines Teils der mit der Mediensitzung zusammenhängenden Mediendaten auf der Basis der empfangenen Information eingerichtet ist, **gekennzeichnet dadurch, dass** die erste Endeinrichtung (10, 40) zum Bereitstellen der Information, die der Mediensitzung zugeordnet ist, durch Anzeigen eines der Mediensitzung zugeordneten visuellen Erkennungszeichens (30) eingerichtet ist, und die zweite Endeinrichtung (20) zum Empfangen der Information, die der Mediensitzung zugeordnet ist, durch Lesen des besagten, von der ersten Endeinrichtung angezeigten visuellen Erkennungszeichens eingerichtet ist.

11. System nach Anspruch 10, **gekennzeichnet dadurch, dass** das visuelle Erkennungszeichen zumindest einen Strichcode umfasst (30).

## Revendications

1. Procédé de transfert d'informations de médias, le procédé comprenant les étapes consistant à :
recevoir et présenter (101) des données de médias relatives à une session de médias par un premier équipement terminal (10, 40),
transférer du premier équipement terminal (10, 40) à un second équipement terminal (20) des informations associées à la session de médias et
commencer à recevoir et à présenter (104) au moins une partie des données de médias relatives à la session de médias par le second équipement terminal (20) sur la base des informations transférées, **caractérisé en ce que** le transfert des informations associées à la session de médias comprend :
l'affichage (102) par le premier équipement terminal (10, 40) d'un identificateur visuel (30) associé à la session de médias et
la lecture (103) par le second équipement terminal (20) dudit identificateur visuel affiché par le premier équipement terminal.

2. Procédé selon la revendication 1, **caractérisé par** la réception par le second équipement terminal (20) de ladite au moins une partie des données de médias provenant d'une source différente ou de la même source que le premier équipement terminal (10, 40).

3. Procédé selon la revendication 1 ou 2, **caractérisé en ce que** le format de ladite au moins une partie des données de médias à recevoir par le second équipement terminal (20) est adapté aux nécessités de propriétés de réception de données de médias et/ou aux propriétés de reproduction de données de médias du second équipement terminal.

4. Procédé selon la revendication 3, **caractérisé en ce que** le format des données de médias définit le format d'encodage des données de médias, la résolution des données de médias et/ou le débit des données de médias.

5. Procédé selon l'une quelconque des revendications 1 à 4, **caractérisé en ce que** les données de médias comprennent au moins des données vidéo et/ou des données audio.

6. Procédé selon la revendication 5, **caractérisé en ce que** les données de médias reçues par le premier équipement terminal (10, 40) comprennent au moins des données vidéo et des données audio, dans lequel le second équipement terminal (20) reçoit et présente ou présente seulement la partie de données audio des données de médias.

7. Procédé selon l'une quelconque des revendications 1 à 6, **caractérisé en ce que** l'identificateur visuel (30) associé à la session de médias identifie la session de médias ou les données de médias et/ou la source des données de médias relatives à la session de médias.

8. Procédé selon la revendication 7, **caractérisé en ce que** l'identificateur visuel (30) associé à la session de médias identifie en outre une position des données de médias dans le temps.

9. Procédé selon l'une quelconque des revendications 1 à 8, **caractérisé en ce que** l'identificateur visuel comprend au moins un code à barres (30).

10. Système de transfert d'informations de médias, le système comprenant :
un premier équipement terminal (10, 40) configuré pour recevoir et présenter des données de médias relatives à une session de médias et pour fournir des informations associées à la session de médias ; et
un second équipement terminal (20) configuré pour recevoir les informations associées à la session de médias fournies par le premier équipement terminal et pour recevoir et présenter au moins une partie des données de médias relatives à la session de médias sur la base des informations reçues, **caractérisé en ce que** :
le premier équipement terminal (10, 40) est configuré pour fournir les informations associées à la session de médias en affichant un identificateur visuel (30) associé à la session de médias, et
le second équipement terminal (20) est configuré pour recevoir les informations associées à la session de médias par une lecture dudit identificateur visuel affiché par le premier équipement terminal.

11. Système selon la revendication 10, **caractérisé en ce que** l'identificateur visuel (30) comprend au moins un code à barres.
